# EUROPEAN PATENT SPECIFICATION

(11) **EP 1 792 766 B1**
(45) Date of publication and mention of the grant of the patent: **17.03.2010**
(21) Application number: 06021975.5
(22) Date of filing: 19.10.2006
(51) Int. Cl.: B60K 11/04, F01P 7/10, F01P 11/10, F01P 5/06, F02B 29/04, B60K 11/08

(54) **Cooling device of a vehicle and a vehicle provided therewith**
Kühlvorrichtung eines Fahrzeuges und Fahrzeug mit einer solchen Vorrichtung
Dispositif de refroidissment d'un véhicule et véhicule comprenant le même

(30) Priority: 30.11.2005 JP 2005345737
(43) Date of publication of application: 06.06.2007
(73) Proprietor: Mazda Motor Corporation, Aki-gun, Hiroshima 730-8670 (JP)
(72) Inventor: Nagano, Naoki, Aki-gun Hiroshima 730-8670 (JP); Kozono, Tomoya, Aki-gun Hiroshima 730-8670 (JP)
(74) Representative: Müller-Boré & Partner Patentanwälte

(56) References cited:
- EP-A- 1 715 157
- WO-A-2005/119024
- DE-A1- 2 216 585
- DE-A1- 10 257 838
- DE-U1-202004 010 030
- US-A- 5 970 925
- US-A- 6 106 228
- US-A1- 2002 170 507

## Description

The present invention relates to a cooling device of a vehicle and to a vehicle provided therewith, the cooling device comprising a radiator to cool cooling water or fluid, an electric fan, a fan shroud and the like, which are disposed at a front portion in an engine room.

Conventionally, a cooling device of a vehicle, in which an electric fan, radiator and condenser to cool the cooling water and coolant are assembled to the fan shroud, is known. According to the cooling device, traveling air is taken in by the electric fan, the cooling water of the radiator and the coolant of the condenser are cooled with the traveling air, and the engine room is scavenged with the traveling air taken in (i.e., exhaustion of heated air).

Herein, there is a problem in that the above-described structure may cause the following concern. Namely, when a vehicle travels at a low speed, the electric fan can supply a sufficient amount of traveling air passing thorough a fan opening portion at the fan shroud, thereby ensuring desirable cooling function. When the vehicle travels at a high speed, however, these fan and fan shroud may become an obstacle to increase of an improper flow resistance, so that the amount of traveling air taken in would be reduced and thereby the cooling efficiency would be deteriorated.

Then, in order to solve this problem, there has been an improved device, as disclosed in Japanese Utility Model Laid-Open Publication No. 62-195624, in which openings (air through hole) are formed at the fan shroud in addition to the fan opening portion for the electric fan, and doors are provided at the openings so as to be opened by the traveling air. Herein, when the vehicle travels at the high speed, the doors are opened by the traveling air and the sufficient amount of traveling air flows in through these openings. Thereby, the cooling function of the radiator and condenser and the scavenging function can be ensured properly even at the vehicle high-speed traveling state.

Meanwhile, recent vehicle developments have been requiring a more efficient space designing for the front portion of engine room. Namely, since ensuring a roomy cabin space and a proper safety against a vehicle frontal crash has been required particularly, it has become more difficult to properly layout components surrounding the engine in the engine room for ensuring the sufficient space at the front portion in the engine room. Especially, for the vehicle whose engine is disposed laterally in the engine room, such layout of components, such as auxiliary parts or pipes, is rather difficult due to a considerably limited layout space exiting around the engine.

Specifically, in a case where the cooling device disclosed in the above-described publication is provided in front of the engine, there is a concern that pipes or the like that are disposed between the cooling device and the engine would interfere with the doors provided at the fan shroud when the doors are opened.

Document WO2005/119024 A1, falling within the terms of Art. 54(3) EPC, discloses a cooling system for a motor vehicle, comprising at least one heat exchanger, in particular an intercooler, which is traversed by a medium that is used to cool a motor. The heat exchanger comprises a heat exchanger air-penetration surface that is traversed by an air stream along a first stream path in a first operating mode; and is additionally or alternatively traversed by an air stream along a second stream path running through an air conduction unit in a second operating mode.

Document EP 1 715 157 A1, falling within the terms of Art. 54(3) EPC, discloses a cooling apparatus and method for a vehicle. The cooling device has a heat exchanger, a duct that forms a passage for air that has passed through the heat exchanger, and a cross-flow fan provided with the duct. The fan is placed outside of a horizontal projection area from the vehicle front to the vehicle rear of the heat exchanger. The duct further has an opening portion that opens when the vehicle is at a predetermined speed or more so that the air that has passed through the heat exchanger, when the vehicle is at the predetermined speed or more, passes through the opening portion without passing through the fan.

Thus, according to an aspect, it is a problem of the present invention provide a fan shroud having a more compact layout and which ensures efficient cooling.

This problem is solved by a cooling device of a vehicle having the features disclosed in claim 1. Preferred embodiments are defined in the dependent claims.

The present invention has been devised in view of the above-described problem, and an advantage of the present invention is to allow a cooling device of a vehicle, which includes a fan shroud comprising an opening portion for an electric fan and openings with doors, to properly prevent the doors from interfering with any other parts in an engine room.

According to the present invention, there is provided a cooling device of a vehicle, having a cooling unit comprising a radiator and a fan shroud supporting an electric fan is to be disposed substantially in front of an engine in an engine room,
wherein a plurality of openings are formed at the fan shroud and doors are provided respectively at the openings so as to be at least partly opened by traveling air,
wherein the fan shroud is configured in such a manner that an opening position of at least one of the openings is located forward relative to that of another one of the openings and a position of a rear end of the door provided at the one of the openings is located forward relative to that of a rear end of the door provided at the another one of the openings in a state where the doors are opened.

According to the present invention, the plurality of openings are formed at the fan shroud so as to be located substantially vertically in line beside the electric fan.

According to a further preferred embodiment of the present invention, there is provided a cooling device of a vehicle, in which a cooling unit comprising a radiator and a fan shroud supporting an electric fan is disposed in front of an engine in an engine room, a plurality of openings are formed at the fan shroud so as to be located substantially vertically in line beside the electric fan, and doors are provided respectively at the openings so as to be opened by traveling air, wherein the fan shroud is configured in such a manner that an opening position of at least one of the openings is located forward relative to that of another one of the openings and a position of a rear end of the door provided at the one of the openings is located forward relative to that of a rear end of the door provided at the another one of the openings in a state where the doors are opened.

Accordingly, even when the vehicle traveling speed is low, a sufficient cooling air for the radiator can be endured by the electric fan and the fan shroud, and when the vehicle traveling speed becomes high, the doors provided at the fans shroud are opened by the traveling air and the traveling air can be allowed to come in to the engine room efficiently. Thus, the cooling function of the radiator and the scavenging function of the engine room can be improved. Also, since the position of the rear end of the door provided at the one of the openings is located forward relative to that of the rear end of the door provided at the another one of the openings in the state where the doors are opened, a layout space for pipes or the like behind the door can be ensured properly. Thereby, there can be provided properly a compact layout of the fan shroud in a narrow engine room without interference with any other components/parts.

According to an embodiment of the present invention, the engine is disposed laterally in such a manner that an intake manifold thereof is located at a front portion in the engine room, a transmission is disposed beside the engine, the electric fan preferably is supported substantially at one side of the fan shroud, and the fan shroud is provided in such a manner that the electric fan is or is to be located substantially in front of the transmission and the plural openings are or are to be located substantially in front of the engine.

Accordingly, the compact layout of the fan shroud having the electric fan and the like in front of the laterally-disposed engine can be attained. Namely, the transmission does not generally project forward so much compared to the laterally-disposed engine equipped with the intake manifold and the like at its front. Thus, by applying the layout in which the electric fan having a certain rearward projection is located substantially in front of the transmission and the plural openings are located substantially in front of the engine, a gap formed between the fan shroud and the engine can be made as narrow as possible, thereby attaining the compact layout of the fan shroud.

According to another embodiment of the present invention, the cooling unit further comprises a condenser provided substantially in front of the radiator, preferably the opening position of the opening that is located at a one side or a relatively upper level of the fan shroud is located forward relative to that of another opening that is located at another side or at a relatively lower level of the fan shroud, and the door provided at the opening that is located at the relatively upper level is located at a position where a rear end part thereof does not interfere with a pipe that is provided to be coupled to the condenser in the state where the door is opened.

Generally, the condenser is provided along with the radiator and the fan shroud, so the pipe coupled to the condenser may be disposed near the fan shroud. Herein, by applying the layout in which the door at the opening located at the relatively upper level of the fan shroud is located forward relative to another door at the opening located at the relatively lower level of the fan shroud, any interference of rear end part of the doors with the pipe can be prevented surely in the state where the doors are opened.

According to another embodiment of the present invention, the doors provided at the openings have substantially an identical shape. Thereby, the layout in which the opening position of at least one of the openings is located forward relative to that of another one of the openings can bring up the layout in which that the position of the rear end of the door provided at the one of openings is located forward relative to that of the rear end of the door provided at the another of openings in the state where the doors are opened. Thus, reduction of manufacturing costs can be also improved.

Herein, it is preferable that the fan shroud be formed in a bowl shape to project rearward so that the traveling air can be gathered at the fan opening portion as much as possible and the traveling air can be supplied efficiently into the engine room by the electric motor at the vehicle low-speed traveling state. However, the above-described forward-location of the openings and doors might cause a concern that the sufficient amount of the traveling air could not be gathered at the fan opening portion and thereby the cooling function of the condenser and the radiator or the scavenging function of the engine room might be deteriorated.

Meanwhile, there is generally provided a front grill to let a large amount of traveling air flow in to the engine room at a front portion of the vehicle. Herein, a lower opening portion located at a relatively lower part of the engine room is configured to be relatively large sized to intake much of the air easily, while an upper opening portion located at a relatively upper part of the engine room is configured to be relatively small sized not to intake so much of the air easily.

However, the above-described forward-location of only the opening(s) and the door(s) that are located at the upper part of the fan shroud would not influence badly on the entire supply function of the traveling air. Because, as described above, the amount of traveling air that flows in through the upper opening portion is originally small, compared to the traveling-air amount flowing in through the lower opening portion. Thus, the entire supply function of the traveling air that may be affected mainly by the traveling air flowing in through the lower opening portion would not be influenced badly by the above-described forward-location, and thus the proper layout space of the pile or the like, which is described above, can be ensured properly.

According to another embodiment of the present invention, at least one slant portion is formed on a door opening portion between the two adjacent openings.

According to the invention, there is further provided a vehicle having an engine in an engine room and cooling device according to the invention or a preferred embodiment thereof disposed substantially in front of the engine in the engine room.

According to an embodiment of the present invention, the engine is disposed laterally in such a manner that an intake manifold thereof is located at a front portion in the engine room, a transmission is disposed beside the engine, the fan shroud is provided in such a manner that the electric fan is located substantially in front of the transmission and the plural openings are located substantially in front of the engine.

Other features, aspects, and advantages of the present invention will become apparent from the following description which refers to the accompanying drawings. It should be understood that even though embodiments are separately described, single features thereof may be combined to additional embodiments.

FIG. 1 is a schematic diagram of a vehicle front portion in an engine room of an automotive vehicle equipped with a cooling device of a vehicle according to an embodiment of the present invention.

FIG. 2 is a sectional view of an example of the vehicle front portion, taken along line II-II of FIG. 1.

FIG. 3 is a perspective view of a cooling unit.

FIG. 4 is a rear view of a radiator equipped with a fan shroud, when viewed from the rear of the vehicle.

FIG. 5 is an enlarged perspective view showing a position relationship between door openings of the fan shroud and an inlet pipe.

Hereinafter, a preferred embodiment of the present invention will be described referring to the accompanying drawings. The following descriptions are just about an example of the present invention, and therefore these descriptions should not limit any application or usage of the present invention.

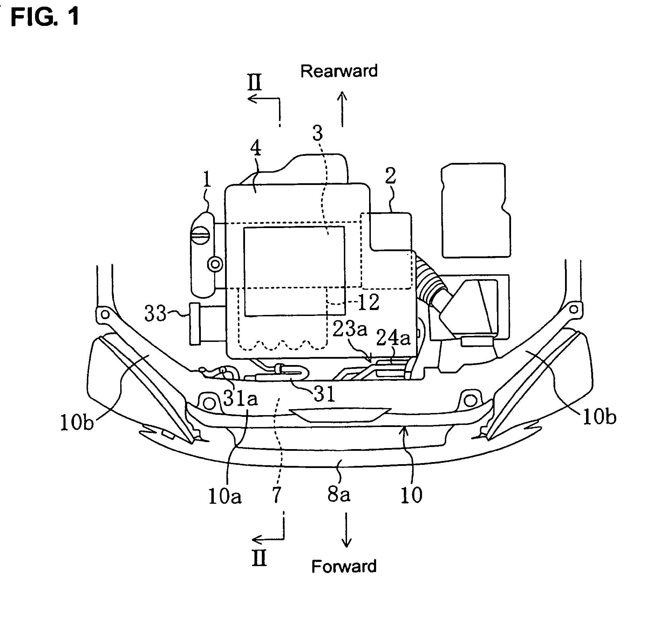

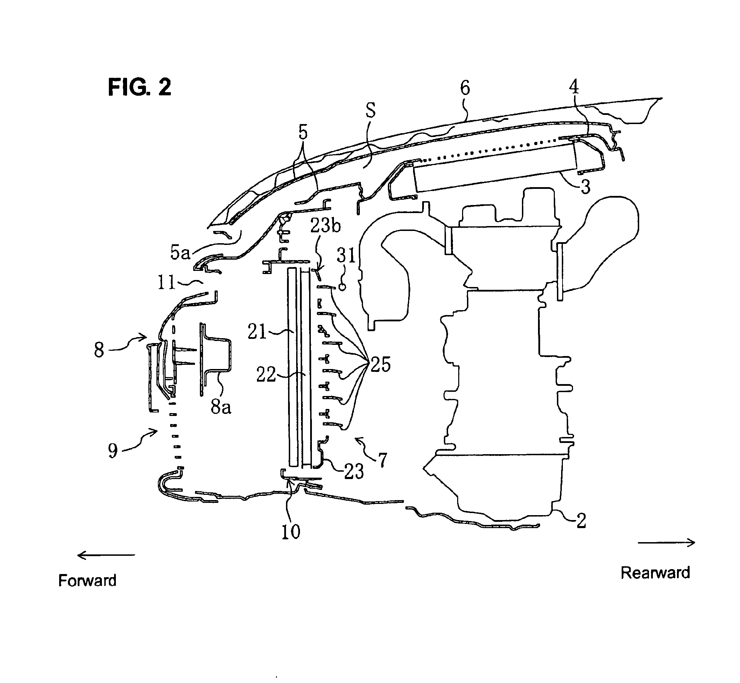

FIGS. 1 and 2 show a vehicle front portion in an engine room of a vehicle equipped with a cooling device according to an embodiment of the present invention. An engine 1 (preferably equipped with a super charger) is disposed laterally in such a manner that an intake manifold 12 is located at or near a front portion in the engine room. A transmission 2 is disposed beside the engine 1, and preferably a metal-made intercooler 3 is disposed substantially above the engine 1 preferably slantingly in such a manner that its rear end is positioned above its front end (see FIG. 2). Herein, illustrating of a hood and part of bumper is omitted in FIG. 1.

The intercooler 3, which has substantially a rectangular shape, is at least partly covered by an intercooler cover 4 substantially from its top. The cover 4 has a wide area that is enough to cover preferably over the substantially entire top of the intercooler 3, and part of the cover 4 that corresponds to the intercooler 3 has a plurality of openings or a grid shape so as to allow traveling air to come in or pass toward the intercooler 3.

Below a hood 6, as shown in FIG. 2, is provided an intercooler duct 5 to take in the traveling air to the intercooler 3 so as to extend from the front to the intercooler 3. This duct 5 preferably is made of a resin material and has a substantially flat shape to form at least one air passage S therein. The duct 5 has an air inlet port 5a preferably with a flat shape at its front end. Thus, the traveling air taken in from the inlet port 5a is supplied to the intercooler 3 via the air passage S in the intercooler duct 5.

In front of the engine 1 is provided a shroud frame 10 supporting a cooling unit 7 (cooling device) that comprises a condenser 21 and a radiator 22. The shroud frame 10 comprises a cooling-unit support portion 10a to support the cooling unit 7 and one or more connecting portions 10b, 10b that extend from the support portion 10a substantially rearward and/or laterally and are fixed or fixable to a vehicle body, respectively, which preferably has substantially a bowl shape as a whole, when viewed from above. The cooling unit 7 is configured to cool cooling water of the engine 1 and coolant of an air conditioner with the traveling air that comes in through a front grill 9, which is formed adjacent to or substantially below a bumper 8 with a bumper beam 8a and the like, and/or at least one air inlet 11, which is formed above the bumper 8.

As shown in FIG. 2, the traveling air coming in through the front grill 9 mainly flows substantially down or rearward toward a lower part of the cooling unit 7, and the traveling air coming in through the air inlet 11 mainly flows substantially down or rearward toward an upper part of the cooling unit 7. Herein, since the air inlet 11 preferably has a considerably smaller passage section than the front grill 9, the airflow amount from the inlet 11 is rather small compared to that from the front grill 9 does. Accordingly, cooling function of the cooling unit 7 or scavenging function of the engine room may be influenced primarily by the flow amount of the air passing through the lower part of the cooling unit 7, not so much by the flow amount of the air passing through the upper part of the cooling unit 7.

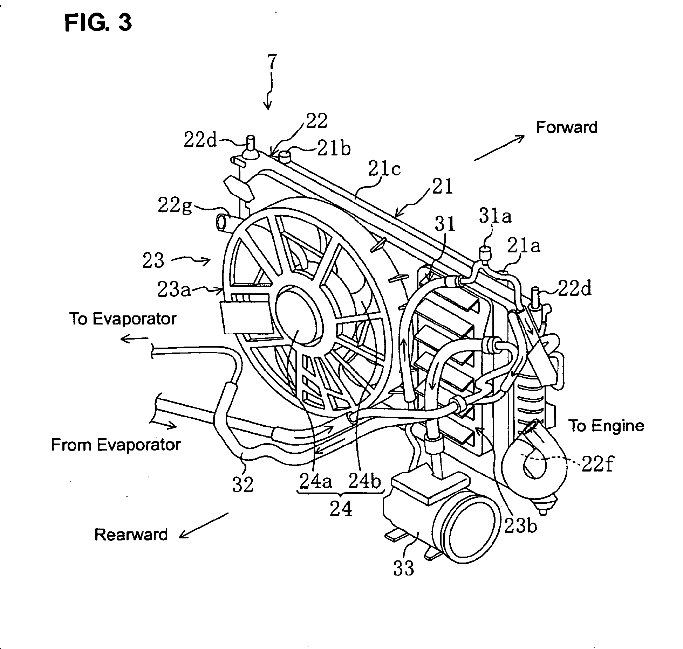

The cooling unit 7 is formed by assembling the condenser 21, radiator 22, and fan shroud 23 which are disposed preferably in this order from the front, as shown in FIG. 3. The traveling air flows (preferably substantially down) at least partly passing through the condenser 21 and radiator 22, whereby the coolant of the air conditioner flowing in the condenser 21 and the cooling water of the engine 1 flowing in the radiator 22 can be cooled. The condenser 21 and the fan shroud 23 are held by hooks 22c, 22c, ... provided at the radiator 22, which will be described below in detail.

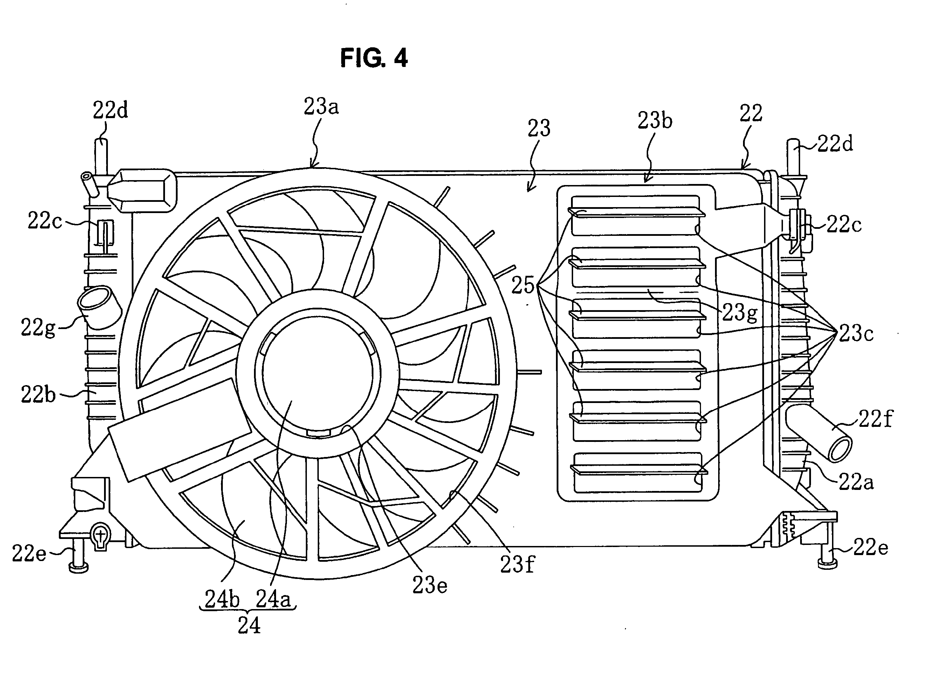

The radiator 22, which preferably is formed in a substantially flat shape as shown in FIG. 4, is a cross-flow type of radiator in which there are provided a cooling-water or -fluid outlet portion 22f to be coupled to a cooling-water or -fluid pipe feeding the cooling water or fluid from the radiator 22 to the engine 1, a cooling-water or -fluid inlet portion 22g to be coupled to another cooling-water or -fluid pipe feeding the cooling water or fluid from the engine 1 to the radiator 22 at its both-side ends. Namely, one or more tank portions 22a, 22b filled with the cooling water or fluid are located preferably at the both sides in a vehicle width direction, and a core portion comprising fins and tubes (not illustrated) is located at its intermediate portion (preferably substantially at its center portion) between the tank portions 22a and 22b.

At front and rear faces of the tank portions 22a, 22b are respectively provided a plurality of hooks 22a, 22c, ... to hold or position the fan shroud 23 and the condenser 21 (only hooks to hold the fan shroud 23 at the rear face are illustrated in FIG. 4). At or close to upper and lower ends of the tank portions 22a, 22b are respectively provided pin portions 22d, 22d, 22e, 22e to be at least partly inserted into engagement holes formed at the cooling-unit support portion 10a of the shroud frame 10.

Herein, a mounting member, not illustrated, is configured to engage with tip portions of the above pin portions 22d, 22d, 22e, 22e that have been at least partly inserted into the engagement portions of the shroud frame 10. A resilient member is provided between the radiator 22 and the shroud frame 10, so the cooling unit 7 with the radiator 22 and the condenser 21 is supported resiliently or movably at the shroud frame 10.

The condenser 21 is also, as shown in FIG. 3, preferably formed in the substantially flat shape so as to extend substantially in the vehicle width direction like the radiator 22. The coolant of the air conditioner flows in a longitudinal direction in the condenser 21. Namely, the condenser 21 comprises, preferably like the radiator 22, a core portion 21c comprising fins and tubes and one or more tank portions 21 a and 21 b provided preferably at its both sides. To the tank portions 21a, 21 b are coupled an inlet pipe 31 to feed the (preferably gas-state) coolant to the tank portions from an evaporator of the air conditioner via a compressor, and an outlet pipe 32 to feed the (preferably liquid-state) coolant cooled at the core portion 21 c to the evaporator.

Hereinafter, the inlet pipe 31 will be described in detail. The inlet pipe 31 is one that is provided between a compressor 33 to increase temperature and pressure of the (preferably gas-state) coolant from the evaporator and the tank portion 21 a of the condenser 21. It has an observing window 31 a for checking the flow of coolant at its intermediate or middle portion. This window 31 a preferably is located at a portion near an upper portion of the engine room so as to provide an easy checking. Meanwhile, since the compressor 33 is generally located at or near a lower portion of the engine room, the inlet pipe 31 interconnecting the compressor 33 and the condenser 21 needs to be provided so as to extend from the lower portion to the upper portion of the engine room. Also, since there is little space in front of the engine 1 of the engine room as shown in FIG. 1, the inlet pipe 31 may pass in back of the cooling unit 7, namely just behind the fan shroud 23.

The fan shroud 23 preferably is made of resin and/or preferably has the bowl shape, which is provided substantially behind the radiator 22. It has also a fan opening portion 23a, in which a (preferably electric) fan 24 is provided, and a door opening portion, which includes a plurality of door openings 23c (air-passing through holes) and doors 23d. These opening portions 23a, 23b are disposed substantially side by side as shown in FIG. 4. The fan shroud 23 is attached or attachable to the radiator 22 in such a manner that the door opening portion 23b is located substantially on the side of engine 1 and/or the fan opening portion 23a is located on or near the transmission 2. Thus, the fan opening portion 23a with the electric fan 24 is disposed substantially on the side of the transmission 2 that does not project forward very much. Accordingly, the distance between the engine 1/the transmission 2 and the cooling unit 7 can be made small, thereby providing a compact layout in the narrow engine room.

The fan opening portion 23a is configured to project substantially rearward and has a recess portion for at least partly accommodating the electric fan 24 therein in a state where the fan shroud 23 is installed in the engine room. Its substantially center or intermediate portion has an through hole 23e for providing a motor 24a of the fan 24. And, at the fan opening portion 23a is provided an opening 23f that are disposed preferably substantially in a donut shape to at least partly encompass the though hole 23e. There are also provided one or more, preferably a plurality of ribs that extend substantially radially and one or more, preferably a plurality of enforcing ribs that interconnect the ribs at the opening 23f.

According to the above structure, the traveling air passing through the condenser 21 and the radiator 22 flows in the engine room via the fan opening portion 23a preferably under the operation of the electric fan 24. Herein, a state of the operation of the electric fan 24 includes a situation where the vehicle travels at a low speed and therefore a sufficient amount of traveling air to cool the condenser 21 and radiator 22 and scavenge in the engine room may not be obtained. Meanwhile, when the sufficient amount of the traveling air is obtained at the high-speed traveling state, the operation of the electric fan 24 may cause an improper increase of flow resistance and thereby the scavenging function and the like may be deteriorated to the contrary. Accordingly, in this case the traveling air is supposed to be allowed to pass through the door opening portion 23b and to flow in the engine room.

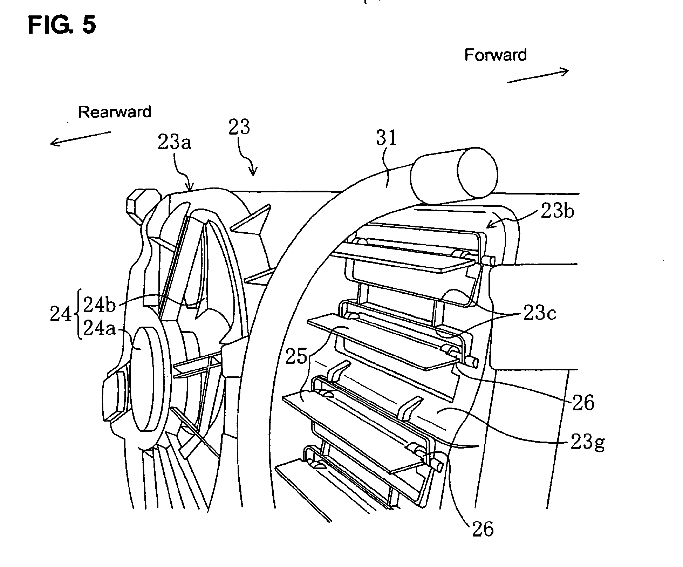

A plurality of door openings 23c, 23c, ..., which preferably are substantially rectangular-shaped opening with a laterally-elongated shape, are formed (preferably substantially vertically in line) on or in the door opening portion 23b. And, the doors 25, 25, ... are provided at the door openings 23c, 23c, ... so as to be rotatable or pivotable. Specifically, as shown in FIG. 5, each door 25 preferably has likewise substantially a rectangular shape so as to at least partly cover the door opening 23c. To the door 25 are fixed one or more pins 26 that extend substantially laterally, both ends of which are pivotally supported at both ends of a frame portion of each door opening 23c. A fixing position of the pin 26 to the door 25 is offset laterally or upward from the center of the door 25 preferably substantially in the vertical direction.

This offset fixing of the pin 26 to the door 25 can facilitate a smooth rotation of the door 25 according to the traveling air coming in from the front and provide a proper closing of the door opening 23c by the door 25 preferably due to its weight when the door 25 does not receive any force of the traveling air or the like.

As described above, at the fan shroud 23 are provided the fan opening portion 23a with the electric fan 24 and the door opening portion 23b where the doors 25 open or close the door openings 23c according to the traveling air. Accordingly, when the vehicle traveling speed is so low that the traveling air is not sufficient, the operation of the electric fan 24 can ensure the cooling function of the condenser 21 and the radiator 22 and the scavenging function of the engine room. Meanwhile, when the sufficient traveling air is provided as the vehicle traveling speed increases, the traveling air can be also allowed to come in through the door opening portion 23b, thereby ensuring the above functions.

And, the door opening portion 23b preferably is configured in such a manner that its upper or first part is located forward relative to its lower or second part. Namely, the opening position of the top two door openings 23c, 23c, which are located at a first position or level (preferably a relatively upper level), is located forward relative to that of the other door openings 23c, 23, ..., which are located at a second position or level (preferably at a relatively lower level). And, the position of rear ends of the doors 25, 25 at these two first (top) door openings 23c, 23c is located forward relative to that of rear ends of the other second (lower) doors 25, 25, ... in a state where the doors are opened.

Specifically, a slant portion 23g is formed on the door opening portion 23b between the first (upper) part and the second (lower) part. Thereby, the positions of the door openings 23c, 23c and the doors 25, 25 that are positioned on one side of (preferably above) the slant portion 23g are located substantially forward relative to the positions of the other door openings 23c, 23c, ... and the other doors 25, 25, ... that are positioned on the other side of (preferably below) the slant portion 23g. According to this structure, the first (upper-positioned) doors 25, 25 can be properly prevented from interfering with the above-described inlet pipe 31 that extends vertically just behind the fan shroud 23 (see FIGS. 2 and 5).

The fan shroud 23 is formed in the bowl shape so that the traveling air can be gathered at the fan opening portion 23a preferably as much as possible. Accordingly, the above-described forward-location of the door openings 23c, 23c may cause a concern that a sufficient amount of the traveling air could not be gathered at the fan opening portions 23a and thereby the cooling function of the condenser 21 and the radiator 22 or the scavenging function of the engine room might be deteriorated.

However, since, as described above, the mount of the traveling air that substantially flows rearward or down from the front grill 9 to (preferably the lower part of) the cooling unit 7 is much larger than that of the traveling air that substantially flows rearward or down from the air inlet 11 formed at the bumper 8 to (preferably the upper part of) the cooling unit 7, the forward-location of only the door openings 23c, 23c and the doors 25, 25 that are located at the first part (preferably upper part) of the door opening portion 23b would not influence badly on the entire cooling function of the cooling unit 7 or the scavenging function of the engine room.

Accordingly, interference of the doors 25, 25 provided at the fan shroud 23 with the inlet pipe 31 of the condenser 21 can be prevented surely without providing any bad influence on the cooling function of the condenser 21 and radiator 22 or the scavenging function of the engine room.

According to the above-described embodiment, since the positions of the door openings 23c, 23c which are located at the first position or level (preferably at the relatively upper level) of the door opening portion 23b of the fan shroud 23 and the doors 25, 25 provided at these door openings 23c, 23c are located respectively forward relative to those of the other door openings 23c, 23c, ..., and the other doors 25, 25, a layout space for the pipe can be provided just behind the fan shroud 23.

Further, since the fan shroud 23 preferably is configured in such a manner that the door opening portion 23b is located on the side of engine 1 that projects forward and the fan opening portion 23a is located on the transmission 2 that does not project forward very much, a compact layout of the cooling unit 7 in the narrow engine room can be provided.

Also, since the fan shroud 23 is configured in such a manner, as described above, that the opening position of the door openings 23c, 23c which are located at the first position or level (preferably at the relatively upper level) of the door opening portion 23b of the fan shroud 23 is located forward relative to that of the other door openings 23c, 23c, ..., the above-described function and effect can be obtained even by preferably using substantially an identical shape/size of the doors 25, 25, ... provided at the door openings 23c, 23c, .... Thus, manufacturing costs can be also reduced.

The present invention should not be limited to the above-described embodiment, and any other modifications and improvements can be applied. For example, although the positions of the upper door openings 23c, 23c and the upper doors 25, 25 are located respectively forward relative to those of the other door openings 23c, 23c, ..., and the other doors 25, 25 in the above-described embodiment, the door openings 23c and doors 25 whose positions should be located forward relative to others may be properly selected according to the layout of the pipe or the like. Also, the number of such door openings 23c and doors 25 whose positions should be located forward should not be limited to the two, and any other number, one or three or more, may be applied.

Accordingly, at a fan shroud 23 forming part of a cooling unit 7 are provided a fan opening portion 23a with an electric fan 24 and a door opening portion 23b that includes a plurality of door openings 23c, 23c, ... that preferably are formed substantially vertically in line. A slant portion 23g is formed on the door opening portion 23b in such a manner that positions of the door openings 23c, 23c which are located at a relatively upper level of the door opening portion 23b and the doors 25, 25 provided at these door openings 23c, 23c are located respectively forward relative to those of the other door openings 23c, 23c, ..., and the other doors 25, 25. Accordingly, any interference of the doors 25 with other parts in the engine room can be prevented properly.

## Claims

1. A cooling device of a vehicle, having a cooling unit (7) comprising a radiator (22) and a fan shroud (23) supporting an electric fan (24) is to be disposed substantially in front of an engine (1) in an engine room,
wherein a plurality of openings (23c, 23c,...) are formed at the fan shroud (23) and doors (25, 25,...) are provided respectively at the openings (23c, 23c,...) so as to be at least partly opened by traveling air,
wherein the fan shroud (23) is configured in such a manner that an opening position of at least one of the openings (23c, 23c,...) is located forward relative to that of another one of the openings (23c, 23c,...) and a position of a rear end of the door (25) provided at the one of the openings (23c, 23c,...) is located forward relative to that of a rear end of the door (25) provided at the another one of the openings (23c, 23c,...) in a state where the doors (25) are opened;
wherein the plurality of openings (23c, 23c,...) are formed at the fan shroud (23) so as to be located substantially vertically in line beside the electric fan (24) and wherein the electric fan (24) is supported at one side of the fan shroud (23).

2. The cooling device of a vehicle of claim 1, wherein the engine (1) is disposed laterally in such a manner that an intake manifold (12) thereof is located at a front portion in the engine room, a transmission (2) is disposed beside the engine (1), the fan shroud (23) is provided in such a manner that the electric fan (24) is to be located substantially in front of the transmission (2) and the plural openings (23c, 23c,...) are to be located substantially in front of the engine (1).

3. The cooling device of a vehicle of any one of the preceding claims, wherein the cooling unit (7) further comprises a condenser (21) provided substantially in front of the radiator (22).

4. The cooling device according to claim 3, wherein the opening position of the opening (23c) that is located at a relatively upper level of the fan shroud (23) is located forward relative to that of another opening (23c) that is located at a relatively lower level of the fan shroud (23), and/or the door (25) provided at the opening (23c) that is located at the relatively upper level is located at a position where a rear end part thereof (25) does not interfere with a pipe (31) that is provided to be coupled to the condenser (21) in the state where the door (25) is opened.

5. The cooling device of a vehicle of any one of the preceding claims, wherein the doors (25, 25,...) provided at the openings (23c, 23c,...) have substantially an identical shape.

6. The cooling device of a vehicle of any one of the preceding claims, wherein at least one slant portion (23g) is formed on a door opening portion (23b) between the two adjacent openings (23c).

7. A vehicle having an engine (1) in an engine room and cooling device of any one of the preceding claims disposed substantially in front of the engine (1) in the engine room.

8. The vehicle of claim 7, wherein the engine (1) is disposed laterally in such a manner that an intake manifold (12) thereof is located at a front portion in the engine room, a transmission (2) is disposed beside the engine (1), the fan shroud (23) is provided in such a manner that the electric fan (24) is located substantially in front of the transmission (2) and the plural openings (23c, 23c,...) are located substantially in front of the engine (1).

## Patentansprüche

1. Kühlvorrichtung eines Fahrzeuges mit einer Kühleinheit (7), die einen Kühler (22) und eine Lüfterzarge (23), die einen elektrischen Ventilator bzw. Lüfter (24) hält, umfasst, welche im Wesentlichen vor einem Motor (1) in einem Motorraum angeordnet werden soll,
wobei eine Vielzahl von Öffnungen (23c, 23c, ...) an der Lüfterzarge (23) ausgebildet ist und Klappen (25, 25, ...) jeweils an den Öffnungen (23c, 23c, ...) bereitgestellt sind, so dass sie zumindest teilweise durch durchlaufende Luft geöffnet werden,
wobei die Lüfterzarge (23) in einer derartigen Weise aufgebaut ist, dass in einem Zustand, in dem die Klappen (25) geöffnet sind, eine Öffnungsposition wenigstens einer der Öffnungen (23c, 23c, ...) sich relativ zu der einer anderen der Öffnungen (23c, 23c) vorwärts befindet und eine Position eines hinteren Endes der an der einen der Öffnungen (23c, 23c, ...) bereitgestellten Klappe (25) sich relativ zu der des hinteren Endes der an der anderen der Öffnungen (23c, 23c, ...) bereitgestellten Klappen (25) vorwärts befindet;
wobei die Vielzahl von Öffnungen (23c, 23c) an der Lüfterzarge (23) ausgebildet sind, so dass sie sich vertikal ausgerichtet neben dem elektrischen Lüfter (24) befinden, und wobei der elektrische Lüfter (24) auf einer Seite der Lüfterzarge (23) gehalten wird.

2. Kühlvorrichtung eines Fahrzeuges nach Anspruch 1, wobei der Motor (1) in einer derartigen Weise seitlich angeordnet ist, dass sein Ansaugrohr (12) sich in einem vorderen Abschnitt in dem Motorraum befindet, ein Getriebe (2) neben dem Motor (2) angeordnet ist, die Lüfterzarge (23) in einer derartigen Weise bereitgestellt ist, dass der elektrische Lüfter (24) sich im Wesentlichen vor dem Getriebe (2) befinden soll, und die mehreren Öffnungen (23c, 23c, ...) im Wesentlichen vor dem Motor (1) angeordnet sein sollen.

3. Kühlvorrichtung eines Fahrzeuges nach einem der vorangehenden Ansprüche, wobei die Kühleinheit (7) ferner einen Kondensator (21) umfasst, der im Wesentlichen vor dem Kühler (22) bereitgestellt ist.

4. Kühlvorrichtung nach Anspruch 3, wobei die Öffnungsposition der Öffnung (23c), die sich auf einer relativ höheren Höhe der Kühlerzarge (23) befindet, relativ zu der einer anderen Öffnung (23c), die sich auf einer relativ niedrigeren Höhe der Lüfterzarge (23) befindet, vorwärts angeordnet ist, und/oder die Klappe (25), die an der Öffnung (23c) bereitgestellt ist, die sich auf der relativ höheren Höhe befindet, an einer Position angeordnet ist, wo ein hinteres Ende davon (25) in einem Zustand, in dem die Klappe (25) geöffnet ist, nicht mit einer Rohrleitung (31) ins Gehege kommt, die bereitgestellt ist, um mit dem Kondensator (21) verbunden zu werden.

5. Kühlvorrichtung eines Fahrzeuges nach einem der vorangehenden Ansprüche, wobei die an den Öffnungen (23c, 23c, ...) bereitgestellten Klappen (25, 25, ...) im Wesentlichen eine identische Form haben.

6. Kühlvorrichtung eines Fahrzeuges nach einem der vorangehenden Ansprüche, wobei wenigstens ein abgeschrägter Abschnitt (23g) auf einem Klappenöffnungsabschnitt (23b) zwischen den zwei benachbarten Öffnungen (23c) ausgebildet ist.

7. Fahrzeug mit einem Motor (1) in einem Motorraum und Kühlvorrichtung nach einem der vorangehenden Ansprüche, die im Wesentlichen vor dem Motor (1) in dem Motorraum angeordnet ist.

8. Fahrzeug nach Anspruch 7, wobei der Motor (1) seitlich in einer derartigen Weise angeordnet ist, dass sein Ansaugrohr (12) sich in einem vorderen Abschnitt in dem Motorraum befindet, ein Getriebe (2) neben dem Motor (1) angeordnet ist, die Lüfterzarge (23) in einer derartigen Weise bereitgestellt ist, dass der elektrische Lüfter (24) sich im Wesentlichen vor dem Getriebe (2) befindet, und die mehreren Öffnungen (23c, 23c, ...) sich im Wesentlichen vor dem Motor (1) befinden.

## Revendications

1. Dispositif de refroidissement d'un véhicule automobile, ayant une unité de refroidissement (7) comprenant un radiateur (22) et un carénage de ventilateur (23) qui soutient un ventilateur électrique (24) devant être disposé sensiblement devant un moteur (1) dans un compartiment de moteur,
dans lequel une pluralité d'ouvertures (23c, 23c, ...) est formée sur le carénage de ventilateur (23) et dans lequel des abattants (25, 25, ...) sont prévus respectivement sur les ouvertures (23c, 23c, ...) de manière à être ouverts au moins en partie pendant la traversée de l'air,
dans lequel le carénage de ventilateur (23) est configuré d'une manière telle qu'une position d'ouverture d'au moins une des ouvertures (23c, 23c, ...) est placée à l'avant par rapport à celle d'une autre des ouvertures (23c, 23c, ...) et dans lequel une position d'une extrémité arrière de l'abattant (25) prévue sur la une des ouvertures (23c, 23c, ...) est placée à l'avant par rapport à celle d'une extrémité arrière de l'abattant (25) prévu sur l'autre d'une des ouvertures (23c, 23c, ...) dans un état dans lequel les abattants (25) sont ouverts ;
dans lequel la pluralité des ouvertures (23c, 23c, ...) est formée sur le carénage de ventilateur (23) de manière à être placée sensiblement à la verticale en alignement à côté du ventilateur électrique (24) et dans lequel le ventilateur électrique (24) est soutenu sur un côté du carénage de ventilateur (23).

2. Dispositif de refroidissement d'un véhicule automobile selon la revendication 1, dans lequel le moteur (1) est disposé latéralement d'une manière telle qu'un collecteur d'admission (12) de celui-ci est placé sur une partie avant dans le compartiment de moteur, dans lequel une transmission (2) est placée à côté du moteur (1), dans lequel le carénage de ventilateur (23) est prévu d'une manière telle que le ventilateur électrique (24) doit être placé sensiblement devant la transmission (2) et dans lequel la pluralité des ouvertures (23c, 23c, ...) doit être placée sensiblement devant le moteur (1).

3. Dispositif de refroidissement d'un véhicule automobile selon l'une quelconque des revendications précédentes, dans lequel l'unité de refroidissement (7) comprend en outre un condensateur (21) prévu sensiblement devant le radiateur (22).

4. Dispositif de refroidissement d'un véhicule automobile selon la revendication 3, dans lequel la position d'ouverture de l'ouverture (23c) qui est placée sur un niveau relativement supérieur du carénage de ventilateur (23) et qui est placée en avant par rapport à celle d'une autre ouverture (23c) qui est placée sur un niveau relativement inférieur du carénage de ventilateur (23), et/ou dans lequel l'abattant (25) prévu sur l'ouverture (23c), lequel est placé sur un niveau relativement supérieur, est placé sur une position sur laquelle une partie d'extrémité arrière de celui-ci (25) n'entre pas en collision ave un conduit (31)qui est prévu pour être accouplé au condensateur (21) dans l'état où l'abattant (25) est ouvert.

5. Dispositif de refroidissement d'un véhicule automobile selon l'une quelconque des revendications précédentes, dans lequel les abattants (25, 25, ...) prévus sur les ouvertures (23c, 23c, ...) ont une forme sensiblement identique.

6. Dispositif de refroidissement d'un véhicule automobile selon l'une quelconque des revendications précédentes, dans lequel au moins une partie inclinée (23g) est formée sur une partie d'ouverture d'abattant (23b) entre les deux ouvertures adjacentes (23c).

7. Véhicule automobile ayant un moteur (1) dans un compartiment de moteur et un dispositif de refroidissement selon l'une quelconque des revendications précédentes, lequel est agencé sensiblement devant le moteur (1) dans le compartiment de moteur.

8. Véhicule automobile selon la revendication 7, dans lequel le moteur (1) est disposé latéralement d'une manière telle qu'un collecteur d'admission (12) de celui-ci est placé sur une partie avant dans le compartiment de moteur, dans lequel une transmission (2) est placée à côté du moteur (1), dans lequel le carénage de ventilateur (23) est prévu d'une manière telle que le ventilateur électrique (24) est placé sensiblement devant la transmission (2) et dans lequel la pluralité des ouvertures (23c, 23c, ...) est placée sensiblement devant le moteur (1).
